# EUROPÄISCHE PATENTSCHRIFT

(11) **EP 2 129 930 B1**
(45) Veröffentlichungstag und Bekanntmachung des Hinweises auf die Patenterteilung: **07.12.2011**
(21) Anmeldenummer: 08718163.2
(22) Anmeldetag: 25.03.2008
(51) Int. Cl.: F16D 48/06

(54) **VERFAHREN ZUR STEUERUNG EINER AUTOMATISIERTEN REIBUNGSKUPPLUNG**
METHOD FOR CONTROLLING AN AUTOMATED FRICTION CLUTCH
PROCEDE DE COMMANDE D'UN EMBRAYAGE A FRICTION AUTOMATISE

(30) Priorität: 31.03.2007 DE 102007015679
(43) Veröffentlichungstag der Anmeldung: 09.12.2009
(73) Patentinhaber: ZF Friedrichshafen AG, 88038 Friedrichshafen (DE)
(72) Erfinder: PETZOLD, Rainer, 88045 Friedrichshafen (DE); HERTER, Peter, 88212 Ravensburg (DE); BITZER, Franz, 88048 Friedrichshafen (DE); STAUDINGER, Joachim, 88214 Ravensburg (DE)
(86) Internationale Anmeldenummer: PCT/EP2008/053473
(87) Internationale Veröffentlichungsnummer: WO 2008/119692

(56) Entgegenhaltungen:
- EP-A- 0 616 142
- EP-A- 1 491 787
- EP-A- 1 510 717
- DE-A1- 3 116 455
- FR-A- 2 893 686
- US-A1- 2004 188 218

## Beschreibung

Die Erfindung betrifft ein Verfahren zur Steuerung einer automatisierten Reibungskupplung, die in einem Antriebsstrang eines Kraftfahrzeugs im Kraftfluss zwischen einem Antriebsmotor und einem Fahrgetriebe angeordnet ist, und die mittels einer Federanpressung passiv schließbar ausgebildet ist, mittels eines ansteuerbaren Kupplungsstellers aus- und einrückbar ist, und einen Wegsensor zur Erfassung des jeweiligen Stellweges des Kupplungsstellers oder eines zugeordneten Übertragungselementes aufweist, wobei während des Betriebs des Kraftfahrzeugs ein aktueller Eckpunkt einer für die Steuerung der Reibungskupplung vorgesehenen Drehmomentkennlinie ermittelt und zur Adaption der Drehmomentkennlinie verwendet wird.

Kraftfahrzeuge werden zunehmend mit automatisierten Reibungskupplungen ausgerüstet, durch deren Verwendung der Fahrer beim Anfahren und bei Schaltvorgängen von der Durchführung des koordinierten Ein- und Ausrückens der Kupplung befreit ist und sich auf andere Aufgaben konzentrieren kann. Neben einer Erhöhung des Fahrkomforts kann durch die Verwendung einer automatisierten Reibungskupplung, besonders in Verbindung mit einem automatisierten Schaltgetriebe, auch eine Reduzierung des Kraftstoffverbrauchs und der Schadstoffemissionen eines Kraftfahrzeugs erzielt werden.

Automatisierte Reibungskupplungen der vorbezeichneten Art sind vorwiegend als Trockenkupplungen mit mindestens einer Mitnehmerscheibe und mit einer Federanpressung durch mindestens eine Anpressfeder ausgebildet, da diese Bauart besonders ausgereift und robust ist und eine geringe axiale Baulänge aufweist. Aufgrund des im stellkraftlosen Ruhezustand geschlossenen Betriebszustands ermöglicht diese Kupplungsbauart zudem ein sicheres Abstellen eines Kraftfahrzeugs durch das Einlegen einer Gangstufe zusätzlich zu der Betätigung einer Feststellbremse.

Die Reibungskupplung wird jeweils vorwiegend zur Überbrückung von Drehzahldifferenzen zwischen dem Antriebsmotor und der Eingangswelle des Getriebes beim Anfahren und nach Gangschaltungen in dem Fahrgetriebe sowie zur lastfreien Durchführung der Gangschaltungen geöffnet und nachfolgend geregelt geschlossen, wobei das jeweilige Kupplungsmoment, also das durch die Reibungskupplung momentan übertragbare Drehmoment, über den Kupplungssteller eingestellt wird. Der Kupplungssteller kann beispielsweise als ein druckmittelbetätigter Stellzylinder oder als ein mit einem Spindelgetriebe versehener Elektromotor ausgebildet sein, der außerhalb der Reibungskupplung angeordnet ist, und dessen Stellkolben bzw. Spindelwelle über einen Ausrückhebel mit einem axialbeweglich auf einer gehäusefesten Führungshülse gelagerten Ausrücklager in Verbindung steht, das z.B. mit den Federzungen einer als Membranfeder ausgebildeten Anpressfeder in Kontakt stehen kann. Alternativ dazu ist jedoch auch eine Ausbildung des Kupplungsstellers als ein so genannter Zentralausrücker möglich, bei dem ein ringförmiger Stellkolben eines koaxial zu der Eingangswelle des Fahrgetriebes gehäusefest angeordneten ringzylindrischen Stellzylinders unmittelbar mit dem Ausrücklager verbunden ist.

Die Einstellung eines bestimmten Kupplungsmomentes, beispielsweise eines relativ großen Anfahrmomentes oder eines relativ kleinen Kriechmomentes, erfolgt zumeist weggesteuert nach einer Drehmomentkennlinie, welche das Kupplungsmoment der Reibungskupplung als Funktion des Stellweges bzw. des Ausrückweges des Kupplungsstellers oder eines Übertragungselementes, wie eines Ausrückhebels oder eines Ausrücklagers, wiedergibt. Hierzu wird der entsprechende Stellweg mittels eines Wegsensors erfasst und die Stellkraft des Kupplungsstellers solange verändert, also aus dem geschlossenen Zustand heraus erhöht und aus dem geöffneten Zustand heraus verringert, bis der gewünschte Sollwert des Stellweges erreicht ist. Wird hierbei eine Abweichung des Istwertes des Stellweges von dem Sollwert festgestellt, so wird die Stellkraft entsprechend der Abweichung erhöht oder verringert, bis die Abweichung im Rahmen einer vorgegebenen Toleranz aufgehoben ist.

Die Drehmomentkennlinie ist als Funktion des Stellweges in einem Datenspeicher eines Steuergerätes abgelegt, von dem der Kupplungssteller angesteuert wird. Ausgehend von dem vollständig eingerückten Zustand der Reibungskupplung weist die Drehmomentkennlinie in Ausrückrichtung zunächst einen Leerweg auf, bis zu dem die Kupplung ausgerückt werden kann, ohne dass die Eingangs- und Ausgangselemente der Reibungskupplung von der Anpresskraft der Anpressfeder entlastet werden und demzufolge das übertragbare Drehmoment der Kupplung auf ihrem konstruktiv vorgegebenen Maximalwert verbleibt.

Dieser Leerweg, der z.B. durch die Überbrückung eines Lager- und/oder Verzahnungsspiels zwischen Übertragungselementen der Ausrückvorrichtung, eines Axialspiels zwischen dem Ausrücklager und den Federzungen der Anpressfeder und eines Axialspiels der Triebwelle des Antriebsmotors gebildet sein kann, ist erforderlich, um die Reibungskupplung unter allen Betriebsbedingungen, insbesondere auch bei einer kurzfristigen betriebsbedingten Erwärmung der Kupplungsbauteile und bei einem längerfristigen Verschleiß der Reibbeläge der Kupplung, vollständig einrücken und eingerückt halten zu können.

An diesen Leerweg anschließend weist die Drehmomentkennlinie einen Regelbereich auf, innerhalb dem das übertragbare Drehmoment der Kupplung üblicherweise degressiv von dem Maximalwert auf den Wert Null abnimmt. Danach schließt sich ein Sättigungsbereich an, in dem die Kupplung weiter ausgerückt werden kann, wodurch die Eingangs- und Ausgangselemente der Reibungskupplung voneinander entfernt werden und somit das übertragbare Drehmoment der Kupplung bei Null verbleibt. Dieser Sättigungsbereich ist erforderlich, um unter allen Betriebsbedingungen das vollständige Ausrücken der Kupplung zu ermöglichen.

Die Drehmomentkennlinie einer automatisierten Reibungskupplung ist somit im Wesentlichen bestimmt durch den als Zu-Punkt oder Neutralpunkt bezeichneten Wert des Ausrückweges, bei dem der Leerweg endet und der Regelbereich beginnt, durch einen als Anlegepunkt oder Greifpunkt bezeichneten Wert des Ausrückweges, bei dem der Regelbereich endet und der Sättigungsbereich beginnt, sowie durch den Kennlinienverlauf innerhalb des Regelbereiches, der weitgehend durch die Bauweise der Reibungskupplung bestimmt ist.

Aufgrund von Fertigungstoleranzen von Bauteilen, Setzungserscheinungen der Anpressfeder, Verschleiß der Reibbeläge und durch Wärmeeintrag und/oder drehzahlabhängige Fliehkräfte verursachte Dehnungen und Verformungen von Bauteilen ergeben sich kurzfristige und langfristige Verschiebungen des Zu-Punktes und des Anlegepunktes. Für eine komfortable und verschleißarme Betätigung der Reibungskupplung und der über diese gesteuerten Anfahr- und Schaltvorgänge ist daher eine möglichst genaue Kenntnis der jeweils aktuellen Werte des Zu-Punktes und des Anlegepunktes erforderlich, zwischen denen der Regelbereich der Drehmomentkennlinie liegt und welche mit diesen Eckpunkten adaptiert, also an die aktuellen physikalisch-technischen Realitäten angepasst werden kann.

Zu dieser Problematik liegen schon mehrere Vorschläge für Vorrichtungen und Verfahren zur Steuerung einer automatisierten Reibungskupplung vor, mit denen ein aktueller Wert des Zu-Punktes oder des Anlegepunktes ermittelt werden kann.

Der Zu-Punkt der Drehmomentkennlinie einer Reibungskupplung kann außerhalb von Anfahr- und Schaltvorgängen sowohl bei Fahrzeugstillstand als auch während der Fahrt, und somit relativ häufig ermittelt werden. Eine entsprechende Vorrichtung bzw. ein Verfahren hierzu ist z.B. aus der DE 31 16 455 A1 bekannt. Demzufolge ist vorgesehen, dass die Kupplung aus dem stellkraftfreien, also vollständig eingerückten Zustand heraus durch den Kupplungssteller in Ausrückrichtung mit einer Stellkraft belastet wird, die kleiner als eine zum Ausrücken erforderliche Stellkraft ist, jedoch zur Überbrückung des Leerweges ausreicht. Der hierbei nach Erreichen eines Gleichgewichtszustands des Kupplungsstellers über den Wegsensor erfasste Stellweg wird als aktueller Zu-Punkt abgespeichert und zur Adaption der Drehmomentkennlinie verwendet. Nachteilig an diesem bekannten Verfahren ist jedoch, dass eine aktive Ansteuerung des Kupplungsstellers erforderlich ist, die einen gewissen Aufwand darstellt und durch die eine nachfolgende, durch den Fahrbetrieb bedingte Betätigung der Reibungskupplung behindert und aufgrund eines geänderten Ansprechverhaltens des Kupplungsstellers gestört werden kann.

Die Ermittlung des Anlegepunktes einer Drehmomentkennlinie ist deutlich schwieriger und kann praktisch nur bei Fahrzeugstillstand oder in Ausrollphasen und somit deutlich seltener ermittelt werden. So ist in einigen Verfahren vorgesehen, dass bei stehendem Kraftfahrzeug, laufendem Antriebsmotor und ausgelegten Getriebegängen ein aktueller Wert des Anlegepunktes der Reibungskupplung ermittelt wird, indem die Kupplung aus dem vollständig ausgerückten Zustand kontinuierlich eingerückt wird, bis ein Drehzahlanstieg der Eingangswelle sensiert wird, und dass der dann erfasste Wert des Stellweges als neuer Anlegepunkt oder zur Korrektur eines vorhandenen Anlegepunktes verwendet wird. Entsprechende Verfahren sind beispielsweise in der DE 32 18 933 A1 und der US 4 899 858 A beschrieben.

In anderen Verfahren ist vorgesehen, dass bei stehendem Kraftfahrzeug, betätigter Betriebs- oder Feststellbremse, laufendem Antriebsmotor und eingelegtem Gang ein aktueller Wert des Anlegepunktes der Reibungskupplung ermittelt wird, indem die Kupplung aus dem vollständig ausgerückten Zustand kontinuierlich eingerückt wird, bis eine Reaktion des Antriebsmotors aufgrund einer wirksamen Leerlaufregelung erkennbar ist, und dass der dann erfasste Wert des Stellweges als neuer Anlegepunkt oder zur Korrektur eines vorhandenen Anlegepunktes verwendet wird. Entsprechende Verfahren sind aus der DE 102 23 465 A1 und der DE 197 12 871 A1 bekannt.

EP0616142 A1 und EP1491787 A1 beschreiben ein verfahren nach dem Oberbegiff des Anspruchs 1.

Aufgrund der Nachteile der vorgenannten Verfahren liegt der vorliegenden Erfindung die Aufgabe zugrunde, ein Verfahren zur Steuerung einer automatisierten Reibungskupplung der eingangs genannten Art vorzuschlagen, mit dem die Ermittlung von Eckpunkten einer Drehmomentkennlinie zur Adaption derselben auf einfachere Weise und mit hoher Genauigkeit möglich ist.

Gemäß den Merkmalen des Hauptanspruchs geht die Erfindung daher aus von einem Verfahren zur Steuerung einer automatisierten Reibungskupplung, die in einem Antriebsstrang eines Kraftfahrzeugs im Kraftfluss zwischen einem Antriebsmotor und einem Fahrgetriebe angeordnet ist, und die mittels einer Federanpressung passiv schließbar ausgebildet ist, mittels eines ansteuerbaren Kupplungsstellers aus- und einrückbar ist, und einen Wegsensor zur Erfassung des jeweiligen Stellweges des Kupplungsstellers oder eines zugeordneten Übertragungselementes aufweist, wobei während des Betriebs des Kraftfahrzeugs ein aktueller Eckpunkt einer für die Steuerung der Reibungskupplung Drehmomentkennlinie ermittelt und zur Adaption dieser Drehmomentkennlinie verwendet wird, dachurch gekennzeichnet dass bei vorliegen eines Wertes eines Anlegepunktes dieser als aktueller Anlegepunkt beibehalten wird, und die zwischen dem Zu-Punkt und dem Anlegepunkt liegenden Werte der Drehmomentkennlinie werden durch eine zwischen dem aktuellen Zu-Punkt und dem aktuellen Anlegepunkt proportionale Korrektur adaptiert werden. In dem Drehmomentdiagramm entspricht dies bei einem kleiner werdenden Abstand zwischen dem Zu-Punkt und dem Anlegepunkt einer proportionalen Stauchung und bei einem größer werdenden Abstand zwischen dem Zu-Punkt und dem Anlegepunkt einer proportionalen Dehnung des Arbeitsbereiches der Drehmomentkennlinie.

Außerdem ist gemäß der Erfindung vorgesehen, dass bei eingerückter Reibungskupplung und kraftlos geschaltetem Kupplungssteller in festgelegten Zeitabständen mehrere Werte des Stellweges erfasst werden, und dass aus diesen Werten rechnerisch ein nahe des tatsächlichen Zu-Punktes liegender aktueller Zu-Punkt der Drehmomentkennlinie bestimmt wird, mit dem diese Drehmomentkennlinie adaptiert wird.

Vorteilhafte und zweckmäßige Ausgestaltungen und Weiterbildungen des erfindungsgemäßen Verfahrens sind Gegenstand der Ansprüche 2 bis 8.

Der Erfindung liegt die Erkenntnis zu Grunde, dass bei dem außerhalb von Anfahr- und Schaltvorgängen und somit relativ häufig vorliegenden Betriebszustand der eingerückten Reibungskupplung bei kraftlos geschaltetem Kupplungssteller relativ viele Werte des dem Zu-Punkt entsprechenden Stellweges erfasst werden können, die jedoch aufgrund von motorseitig oder anderweitig verursachten Schwingungen eine große Streuung aufweisen. Durch die Verwendung geeigneter mathematischer Auswertungsverfahren kann dennoch ein relativ nahe am tatsächlichen Zu-Punkt liegender aktueller Zu-Punkt bestimmt werden. Da der Kupplungssteller hierzu in seinem kraftlos geschalteten Zustand verbleibt, werden andere Steuerungsabläufe der Reibungskupplung und des Fahrgetriebes nicht beeinträchtigt. Anders als bei dem bekannten Verfahren zur Bestimmung des Zu-Punktes kann bei dem erfindungsgemäßen Verfahren die Erfassung der Werte des Zu-Punktes für eine Betätigung der Reibungskupplung jederzeit unterbrochen und nachfolgend fortgeführt werden.

Das erfindungsgemäße Verfahren kann darauf ausgerichtet sein, dass mehrere Werte des Stellweges innerhalb einer kurzen Zeitspanne erfasst werden, und der aktuelle Zu-Punkt als der am weitesten in Ausrückrichtung liegende Extremwert dieser Werte bestimmt wird. Aufgrund der relativ kurzen Zeitspanne, in der die Werte des Stellweges erfasst werden, ist der derart bestimmte Zu-Punkt nahezu identisch mit dem tatsächlichen Zu-Punkt, da längerfristige Effekte, wie Wärmedehnung von Bauteilen durch eingetragene Reibungswärme und Verschleiß der Reibbeläge, keine Auswirkung haben können.

Falls jedoch eine kurzfristige Erfassung mehrerer Werte nicht möglich ist, kann alternativ dazu vorgesehen sein, dass mehrere Werte des Stellweges innerhalb einer längeren Zeitspanne erfasst werden, und der aktuelle Zu-Punkt als gewichteter Mittelwert dieser Werte bestimmt wird, wobei die zeitlich weniger weit zurückliegend erfassten Werte stärker gewichtet werden als die zeitlich weiter zurückliegend erfassten Werte. Auch bei dieser Verfahrensvariante liegt der ermittelte Zu-Punkt nahe am tatsächlichen Zu-Punkt, so dass die darauf basierende Adaption der Drehmomentkennlinie relativ genau ist.

Außerdem kann vorgesehen sein, dass mehrere Werte des Stellweges innerhalb einer längeren Zeitspanne erfasst werden, und der aktuelle Zu-Punkt als gewichteter Mittelwert dieser Werte bestimmt wird, wobei die weiter in Ausrückrichtung liegenden Werte stärker gewichtet werden als die weiter in Einrückrichtung liegenden Werte.

Um beim Vorliegen einer schwingungsbedingten periodischen Abweichung von dem tatsächlichen Zu-Punkt eine synchrone Erfassung von jeweils weitgehend gleich weit entfernten Werten des Stellweges zu vermeiden, werden die Zeitabstände zwischen der Erfassung der Werte des Stellweges zweckmäßig variiert.

Um beim Vorliegen einer statischen Abweichung von dem tatsächlichen Zu-Punkt eine fehlerhafte Bestimmung des Zu-Punktes zu vermeiden, sollte zudem bei abgestelltem Antriebsmotor und/oder bei in seiner Neutralstellung befindlichem Fahrgetriebe vor der Erfassung eines oder mehrerer Werte des Stellweges zunächst die Reibungskupplung ausgerückt und wieder eingerückt werden. Hierdurch liegen die Bauteile der Ausrückvorrichtung weitgehend in Ausrückrichtung an, so dass der Leerweg minimal und somit schon die erfassten Werte des Stellweges nahe am tatsächlichen Zu-Punkt liegen.

Wenn nach der Ermittlung eines neuen aktuellen Zu-Punktes kein aktuell ermittelter, sondern schon weiter zurückliegend bestimmter älterer Anlegepunkt vorhanden ist, so werden dieser Anlegepunkt und die zwischen dem Zu-Punkt und dem Anlegepunkt liegenden Werte der Drehmomentkennlinie jeweils korrigiert um die Stellwegdifferenz zwischen dem aktuell ermittelten Zu-Punkt und dem vorher gültigen Zu-Punkt. In dem Drehmomentdiagramm entspricht dies einer Parallelverschiebung der Drehmomentkennlinie entlang der Stellwegachse um die Stellwegdifferenz.

Zur Verdeutlichung der Erfindung ist der Beschreibung eine Zeichnung beigefügt.

In diesen zeigt:
- Fig. 1: ein Diagramm mit der Drehmomentkennlinie einer Reibungskupplung und einer ersten Verfahrensvariante zur Adaption der Drehmomentkennlinie,
- Fig. 2: ein Diagramm mit der Drehmomentkennlinie einer Reibungskupplung und einer zweiten Verfahrensvariante zur Adaption der Drehmomentkennlinie,
- Fig. 3: eine Kupplungsanordnung zur Anwendung des erfindungsgemäßen Verfahrens und
- Fig. 4: ein Diagramm mit der Drehmomentkennlinie einer Reibungskupplung.

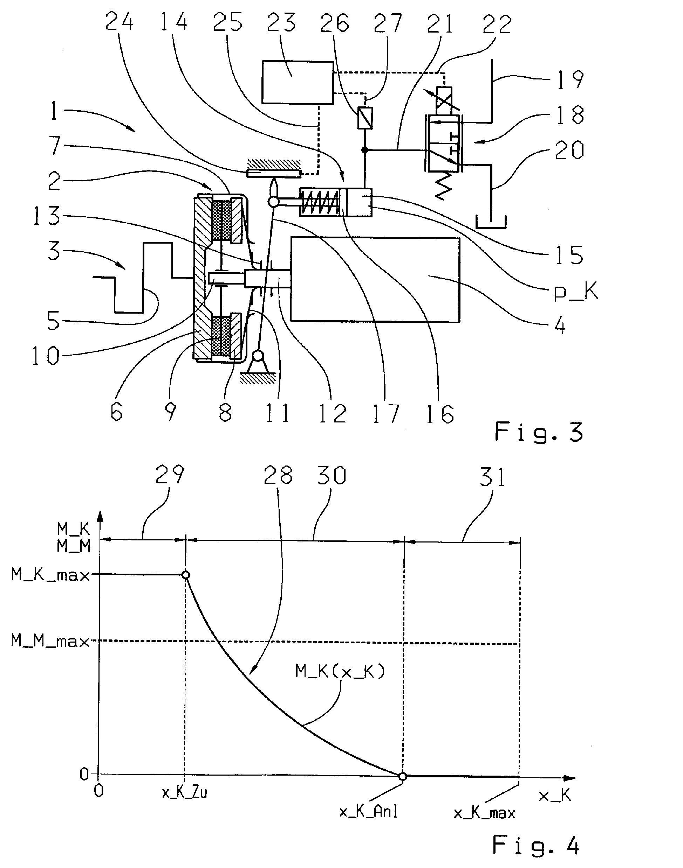

In Fig. 3 ist beispielhaft eine Kupplungsanordnung 1 zur Anwendung des erfindungsgemäßen Verfahrens abgebildet. Dort ist eine als Einscheiben-Trockenkupplung ausgebildete Reibungskupplung 2 im Kraftfluss zwischen einem als Verbrennungskolbenmotor ausgebildeten Antriebsmotor 3 und einem Fahrgetriebe 4 angeordnet.

Der eingangsseitige Teil der Reibungskupplung 2 wird von einem an der Kurbelwelle 5 des Antriebsmotors 3 befestigten Schwungrad 6 und einer über einen Kupplungskorb 7 mit diesem verbundenen Druckplatte 8 gebildet. Der ausgangsseitige Teil der Reibungskupplung 2 wird durch eine axial zwischen dem Schwungrad 6 und der Druckplatte 8 angeordnete Mitnehmerscheibe 9 gebildet, die drehfest und axial verschiebbar auf der Eingangswelle 10 des Fahrgetriebes 4 gelagert ist. Durch eine zwischen dem Kupplungskorb 7 und der Druckplatte 8 angeordnete, als Membranfeder ausgebildete Anpressfeder 11 ist die Reibungskupplung 2 im stellkraftfreien Ruhezustand geschlossen und über ein auf einer gehäusefesten Führungshülse 12 axialbeweglich gelagertes und spielbehaftet an radial inneren Federzungen der Anpressfeder 11 anliegendes Ausrücklager 13 aus- und einrückbar.

Die Betätigung des Ausrücklagers 13 und damit die Einstellung eines gewünschten Kupplungsmomentes M_K der Reibungskupplung 2 erfolgt über einen druckmittelbetätigten Kupplungssteller 14, der vorliegend als ein einfach wirksamer Stellzylinder mit einem axialbeweglich gelagerten und durch einen in einem Druckraum 15 wirksamen Stelldruck p_K gegen die Rückstellkraft einer Rückstellfeder verschiebbaren Stellkolben 16 ausgebildet ist. Der Stellkolben 16 steht mit seiner Kolbenstange über einen endseitig gehäusefest und schwenkbar gelagerten Ausrückhebel 17 spielbehaftet derart mit dem Ausrücklager 13 in Verbindung, dass ein ansteigender Stelldruck p_K zu einem Ausrücken der Reibungskupplung 2 und somit zu einer Verringerung des Kupplungsmomentes M_K führt.

Die Ansteuerung des Kupplungsstellers 14 erfolgt über ein Steuerungsventil 18, das vorliegend als ein 3/2-Wege-Proportionalmagnetventil mit zwei Eingängen und einem Ausgang ausgebildet ist, wobei der erste Eingang mit einer Druckleitung 19, der zweite Eingang mit einer Drucklosleitung 20 und der Ausgang über eine Verbindungsleitung 21 mit dem Druckraum 15 des Kupplungsstellers 14 verbunden ist.

Zur Ansteuerung des Steuerungsventils 18 steht dieses über eine elektrische Steuerleitung 22 mit einem Steuergerät 23 in Verbindung. Eine Änderung des Kupplungsmomentes M_K erfolgt somit bauartbedingt durch eine kontinuierliche Änderung des Stelldruckes p_K des Kupplungsstellers 14.

Zur Erfassung des Stellweges x_K des Stellkolbens 16 bzw. des Ausrückhebels 17 ist an der Kolbenstange des Stellkolbens 16 ein Wegsensor 24 angeordnet, der über eine Sensorleitung 25 mit dem Steuergerät 23 in Verbindung steht. Zur Erfassung des Stelldruckes p_K des Kupplungsstellers 14 ist an die Verbindungsleitung 21 ein Drucksensor 26 angeschlossen, der über eine Sensorleitung 27 mit dem Steuergerät 23 in Verbindung steht. Somit ist prinzipiell sowohl eine wegabhängige Steuerung als auch eine druckabhängige Steuerung der Reibungskupplung 2 möglich. Vorliegend ist jedoch eine wegabhängige Steuerung der Reibungskupplung 2 vorgesehen.

Eine entsprechende Drehmomentkennlinie 28, die das übertragbare Kupplungsmoment M_K in Abhängigkeit von dem durch den Ausrückweg gebildeten Stellweges x_K wiedergibt, ist in allgemeiner Form in Fig. 4 abgebildet. Ausgehend von dem vollständig eingerückten Zustand (x_K = 0) der Reibungskupplung 2 weist die Drehmomentkennlinie 28 in Ausrückrichtung, also mit ansteigendem Ausrückweg x_K, zunächst einen vorliegend durch ein Axialspiel der Kurbelwelle 5, das Leerspiel zwischen dem Ausrücklager 13 und den Federzungen der Anpressfeder 11 sowie durch ein Leerspiel in den Gelenken des Ausrückhebels 17 bedingten Leerweg 29 auf, bis zu dem der Kupplungssteller 14 betätigt werden kann, ohne dass das übertragbare Drehmoment M K der Reibungskupplung 2 den konstruktiv vorgegebenen Maximalwert M_K_max verlässt, der weit über dem maximalen Drehmoment M_M_max des Antriebsmotors 3 liegt.

Daran anschließend weist die Drehmomentkennlinie 28 einen Regelbereich 30 auf, innerhalb dem das übertragbare Drehmoment M_K der Kupplung 2 degressiv von dem Maximalwert M_K_max auf den Wert Null abnimmt. Danach schließt sich ein Sättigungsbereich 31 an, in dem die Reibungskupplung 2 bis zum Erreichen des maximalen Stellweges x_K_max weiter ausgerückt werden kann, wobei das übertragbare Drehmoment M_K bei dem Wert Null verbleibt.

Der Beginn und das Ende des Arbeitsbereiches 30 werden durch den Zu-Punkt x_K_Zu und den Anlegepunkt x_K_Anl markiert, die charakteristische Eckpunkte beziehungsweise Wertepaare der Drehmomentkennlinie 28 bilden. Da der qualitative Verlauf der Drehmomentkennlinie 28 zwischen diesen beiden Eckpunkten konstruktiv vorgegeben ist und sich nicht wesentlich verändert, reicht für eine Adaption, also eine temperatur- und/oder verschleißbedingte Korrektur der Drehmomentkennlinie 28 die Ermittlung der jeweils aktuellen Werte des Zu-Punktes x_K_Zu und des Anlegepunktes x_K_Anl aus. Die dazwischen liegenden Punkte der Drehmomentkennlinie 28 können z.B. durch eine lineare Interpolation zwischen den aktuellen Werten des Zu-Punktes x_K_Zu und des Anlegepunktes x_K_Anl ermittelt werden.

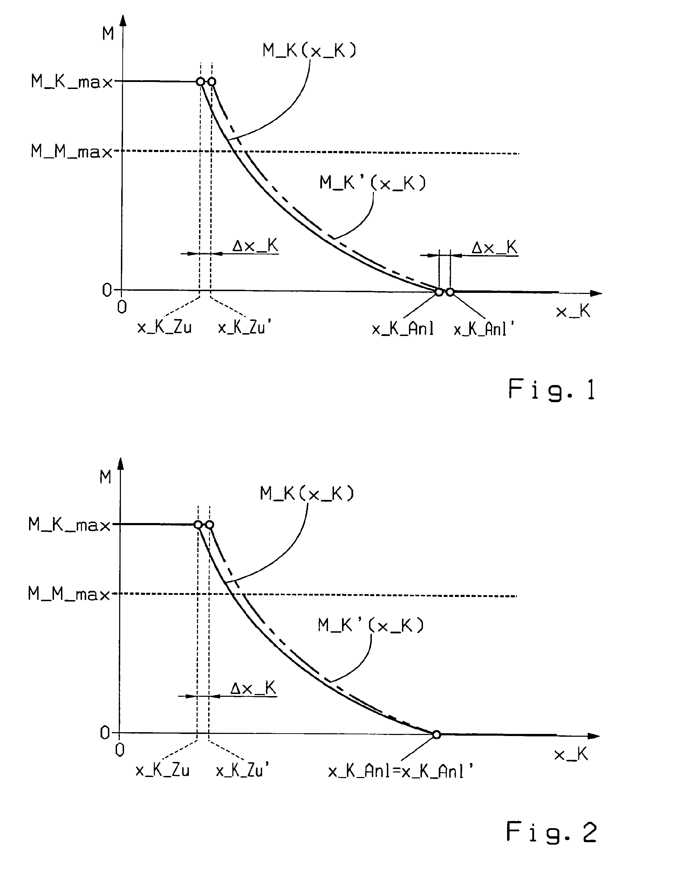

In dem Diagramm von Fig. 1 ist eine Adaption der Drehmomentkennlinie 28 in einem ersten Beispiel veranschaulicht. Bei eingerückter Reibungskupplung 2 und kraftlos geschaltetem Kupplungssteller 14 sind nacheinander mehrere Werte des Stellweges x_K erfasst worden, aus denen rechnerisch, z.B. durch die Bestimmung des am weitesten in Ausrückrichtung liegenden Extremwertes oder durch die Berechnung eines gewichteten Mittelwertes, ein aktueller Zu-Punkt x_K_Zu bestimmt wurde. Zwischen dem gerade ermittelten aktuellen Zu-Punkt x_K_Zu und dem früher ermittelten älteren Zu-Punkt x_K_Zu' besteht die Stellwegdifferenz Δx_K = x_K_Zu - x_K_Zu'.

Da in dem Beispiel von Fig. 1 kein aktueller Anlegepunkt x_K_Anl vorliegt, der deutlich schwieriger und seltener als der Zu-Punkt x_K_Zu ermittelt werden kann, wird der vorhandene ältere Anlegepunkt x_K_Anl' und die zwischen dem Zu-Punkt x_K_Zu und dem Anlegepunkt x_K_Anl liegenden Werte der Drehmomentkennlinie 28 jeweils um die Stellwegdifferenz Δx_K korrigiert und somit die Drehmomentkennlinie 28 adaptiert. Der Verlauf der zum Zeitpunkt des Verfahrensablaufs gültigen älteren Drehmomentkennlinie M_K'(x_K) ist in Fig. 1 als strichpunktierte Linie dargestellt, wogegen der Verlauf der adaptierten aktuellen Drehmomentkennlinie M_K(x_K) von einer durchgezogenen Linie wiedergegeben wird.

Liegt dagegen ein Wert des Anlegepunktes x_K_Anl' vor, der zum Zeitpunkt des Verfahrensablaufs aktuell oder nur kurz zurückliegend ermittelt wurde, so wird dieser "ältere Anlegepunkt" x_K_Anl' als aktueller Anlegepunkt x_K_Anl beibehalten (x_K_Anl = x_K_Anl'), und die zwischen dem Zu-Punkt x_K_Zu und dem Anlegepunkt x_K_Anl liegenden Werte der Drehmomentkennlinie 28 werden durch eine zwischen dem aktuellen Zu-Punkt x_K_Zu und dem aktuellen Anlegepunkt x_K_Anl proportionale Korrektur adaptiert. Dies bedeutet, dass die Korrektur der Werte der Drehmomentkennlinie 28 um die Stellwegdifferenz Δx_K vom Punkt x_K_Zu' bis zum Punkt x_K_Anl' linear auf Null zurückgeht. Eine entsprechende Adaption einer Drehmomentkennlinie 28 ist in Fig. 2 veranschaulicht, wobei der Verlauf der zum Zeitpunkt des Verfahrensablaufs gültigen älteren Drehmomentkennlinie M_K'(x_K) als strichpunktierte Linie und der Verlauf der adaptierten aktuellen Drehmomentkennlinie M_K(x_K) als durchgezogene Linie dargestellt ist.

### Bezugszeichen

- 1: Kupplungsanordnung
- 2: Reibungskupplung
- 3: Antriebsmotor
- 4: Fahrgetriebe
- 5: Kurbelwelle
- 6: Schwungrad
- 7: Kupplungskorb
- 8: Druckplatte
- 9: Mitnehmerscheibe
- 10: Eingangswelle
- 11: Anpressfeder
- 12: Führungshülse
- 13: Ausrücklager
- 14: Kupplungssteller
- 15: Druckraum
- 16: Stellkolben
- 17: Ausrückhebel
- 18: Steuerungsventil
- 19: Druckleitung
- 20: Drucklosleitung
- 21: Verbindungsleitung
- 22: Steuerleitung
- 23: Steuergerät
- 24: Wegsensor
- 25: Sensorleitung
- 26: Drucksensor
- 27: Sensorleitung
- 28: Drehmomentkennlinie
- 29: Leerweg
- 30: Arbeitsbereich
- 31: Sättigungsbereich

- M: Drehmoment
- M_K: Übertragbares Drehmoment, Kupplungsmoment
- M_K(x_K): Aktuelle Drehmomentkennlinie
- M_K'(x_K): Ältere Drehmomentkennlinie
- M_K_max: Maximales Kupplungsmoment
- M_M: Motormoment
- M_M_max: Maximales Motormoment
- p_K: Stelldruck
- x_K: Stellweg, Ausrückweg
- x_K_Anl: Anlegepunkt, aktueller Anlegepunkt
- x_K_Anl': Älterer Anlegepunkt
- x_K_max: Maximaler Stellweg
- x_K_Zu: Zu-Punkt, aktueller Zu-Punkt
- x_K_Zu': Älterer Zu-Punkt
- Δx_K: Stellwegdifferenz

## Patentansprüche

1. Verfahren zur Steuerung einer automatisierten Reibungskupplung, die in einem Antriebsstrang eines Kraftfahrzeugs im Kraftfluss zwischen einem Antriebsmotor (3) und einem Fahrgetriebe (4) angeordnet ist, und die mittels einer Federanpressung passiv schließbar ausgebildet ist, mittels eines ansteuerbaren Kupplungsstellers (14) aus- und einrückbar ist, und einen Wegsensor (24) zur Erfassung des jeweiligen Stellweges (x_K) des Kupplungsstellers (14) oder eines zugeordneten Übertragungselementes (17) aufweist, wobei während des Betriebs des Kraftfahrzeugs ein aktueller Eckpunkt (x_K_Ant, x_K_Zu) einer für die Steuerung der Reibungskupplung (2) vorgesehenen Drehmomentkennlinie (28) ermittelt und zur Adaption der Drehmomentkennlinie (28) verwendet wird, wobei bei eingerückter Reibungskupplung (2) und kraftlos geschaltetem Kupplungssteller (14) in festgelegten Zeitabständen mehrere Werte des Stellweges (x_K) erfasst werden, und dass aus diesen Werten rechnerisch ein nahe des tatsächlichen Zu-Punktes liegender aktueller Zu-Punkt (x_K_Zu) der Drehmomentkennlinie (28) bestimmt wird, mit dem die Drehmomentkennlinie (28) adaptiert wird, **dadurch gekennzeichnet, dass** bei Vorliegen eines Wertes eines Anlegepunktes (x_K_Anl'), der zum Zeitpunkt des Verfahrensablaufs aktuell oder nur kurz zurückliegend ermittelt wurde, dieser als aktueller Anlegepunkt (x_K_Anl) beibehalten wird, und die zwischen dem Zu-Punkt (x_K_Zu) und dem Anlegepunkt (x_K_Anl) liegenden Werte der Drehmomentkennlinie (28) durch eine zwischen dem aktuellen Zu-Punkt (x_K_Zu) und dem aktuellen Anlegepunkt (x_K_Anl) proportionale Korrektur adaptiert werden.

2. Verfahren nach Anspruch 1, **dadurch gekennzeichnet, dass** mehrere Werte des Stellweges (x_K) innerhalb einer kurzen Zeitspanne erfasst werden, und der aktuelle Zu-Punkt (x_K_Zu) als der am weitesten in Ausrückrichtung (x_K_max) liegende Extremwert dieser Werte bestimmt wird.

3. Verfahren nach Anspruch 1, **dadurch gekennzeichnet, dass** mehrere Werte des Stellweges (x_K) innerhalb einer längeren Zeitspanne erfasst werden, und der aktuelle Zu-Punkt (x_K_Zu) als gewichteter Mittelwert dieser Werte bestimmt wird, wobei die zeitlich weniger weit zurückliegend er fassten Werte stärker gewichtet werden als die zeitlich weiter zurückliegend erfassten Werte.

4. Verfahren nach Anspruch 1 oder 3, **dadurch gekennzeichnet, dass** mehrere Werte des Stellweges (x_K) innerhalb einer längeren Zeitspanne erfasst werden, und der aktuelle Zu-Punkt (x_K_Zu) als gewichteter Mittelwert dieser Werte bestimmt wird, wobei die weiter in Ausrückrichtung (x_K_max) liegenden Werte stärker gewichtet werden als die weiter in Einrückrichtung (x_K = 0) liegenden Werte.

5. Verfahren nach zumindest einem der Ansprüche 1 bis 4, **dadurch gekennzeichnet, dass** bei abgestelltem Antriebsmotor (3) und/oder bei in seiner Neutralstellung befindlichem Fahrgetriebe (4) vor der Erfassung eines oder mehrerer Werte des Stellweges (x_K) zunächst die Reibungskupplung (2) ausgerückt und wieder eingerückt wird.

6. Verfahren nach zumindest einem der Ansprüche 1 bis 5, **dadurch gekennzeichnet, dass** bei Vorliegen eines älteren Anlegepunktes (x_K_Anl') dieser Anlegepunkt und die zwischen dem Zu-Punkt (x_K_Zu) und dem Anlegepunkt (x_K_Anl) liegenden Werte der Drehmomentkennlinie (28) jeweils durch eine Korrektur um die Stellwegdifferenz (Δx_K) zwischen dem ermittelten aktuellen Zu-Punkt (x_K_Zu) und dem vorher gültigen älteren Zu-Punkt (x_K_Zu') adaptiert werden.

## Claims

1. Method for controlling an automated friction clutch which is arranged in a drive train of a motor vehicle in the force flux between a drive motor (3) and a transmission (4), and which is designed to be passively closeable by means of spring pressure and can be disengaged and engaged by means of a controllable clutch actuator (14), and has a travel sensor (24) for sensing the respective actuation travel (x_K) of the clutch actuator (14) or of an assigned transmission element (17), wherein during the operation of the motor vehicle a current reference point (x_K_Anl, x_K_Zu) of a torque characteristic curve (28) which is provided for controlling the friction clutch (2) is determined and is used to adapt the torque characteristic curve (28), wherein, when the friction clutch (2) is engaged and the clutch actuator (14) is switched to the de-energized state, a plurality of values of the actuation travel (x_K) are acquired at fixed time intervals, and in that a current closed point (x_K_Zu) of the torque characteristic curve (28) which is close to the actual closed point and with which the torque characteristic curve (28) is adapted is determined computationally from these values, **characterized in that** when a value of a contact point (x_K_Anl') which was determined the same time as or only shortly before the time of the method sequence is present, said contact point (x_K_Anl') is maintained as the current contact point (x_K_Anl) and the values of the torque characteristic curve (28) which are between the closed point (x_K_Zu) and the contact point (x_K_Anl) are adapted by a proportional correction between the current closed point (x_K_Zu) and the current contact point (x_K_Anl).

2. Method according to Claim 1, **characterized in that** a plurality of values of the actuation travel (x_K) are sensed within a brief time period and the current closed point (x_K_Zu) is determined as the extreme value of these values which is furthest in the disengagement direction (x_K_max).

3. Method according to Claim 1, **characterized in that** a plurality of values of the actuation travel (x_K) are sensed within a relatively long time period, and the current closed point (x_K_Zu) is determined as a weighted mean value of these values, wherein the values which are acquired chronologically less far in the past are weighted to a greater extent than the values which are acquired chronologically further in the past.

4. Method according to Claim 1 or 3, **characterized in that** a plurality of values of the actuation travel (x_K) are acquired within a relatively long time period, and the current closed point (x_K_Zu) is determined as weighted mean value of these values, wherein the values lying further in the disengagement direction (x_K_max) are weighted to a greater extent than the values which lie further in the engagement direction (x_K = 0).

5. Method according to at least one of Claims 1 to 4, **characterized in that** when the drive engine (3) is switched off and/or when the transmission (4) is in its neutral position before one or more values of the actuation travel (x_K) are acquired, the friction clutch (2) is firstly disengaged and engaged again.

6. Method according to at least one of Claims 1 to 5, **characterized in that**, when a relatively old contact point (x_K_Anl') is present, this contact point and the values of the torque characteristic curve (28) between the closed point (x_K_Zu) and the contact point (x_K_Anl) are respectively adapted by correction by the actuation travel difference (Δx_K) between the determined current closed point (x_K_Zu) and the previously valid older closed point (x_K_Zu').

## Revendications

1. Procédé de commande d'un accouplement à friction automatisé qui est disposé dans une chaîne motrice d'un véhicule automobile dans le flux des forces entre un moteur d'entraînement (3) et une boîte de vitesses (4) et qui est configuré pour pouvoir être fermé de manière passive au moyen d'une compression par ressort, qui peut être débrayé et embrayé au moyen d'un actionneur d'accouplement (14) commandable et qui présente un détecteur de course (24) pour détecter la course d'actionnement (x_K) correspondante de l'actionneur d'accouplement (14) ou d'un élément de transmission (17) associé, un point de référence actuel (x_K_Anl, x_K_Zu) d'une courbe caractéristique de couple (28) prévue pour la commande de l'accouplement à friction (2) étant déterminé pendant le fonctionnement du véhicule automobile et utilisé pour l'adaptation de la courbe caractéristique de couple (28), plusieurs valeurs de la course d'actionnement (x_K) étant acquises à intervalles fixes lorsque l'accouplement à friction (2) est embrayé et aucune force n'est appliquée à l'actionneur d'accouplement (14), et un point de fermeture (x_K_Zu) actuel de la courbe caractéristique de couple (28) étant calculé à partir de ces valeurs, lequel se trouve à proximité du point de fermeture réel et sert à adapter la courbe caractéristique de couple (28), **caractérisé en ce qu'**en présence d'une valeur d'un point d'application (x_K_Anl') qui a été déterminée actuellement au moment du déroulement du procédé ou seulement peu de temps avant, celle-ci est conservée comme point d'application (x_K_Anl) actuel et les valeurs de la courbe caractéristique de couple (28) qui se trouvent entre le point de fermeture (x_K_Zu) et le point d'application (x_K_Anl) sont adaptés par une correction proportionnelle entre le point de fermeture (x_K_Zu) actuel et le point d'application (x_K_Anl) actuel.

2. Procédé selon la revendication 1, **caractérisé en ce que** plusieurs valeurs de la course d'actionnement (x_K) sont acquises à l'intérieur d'un intervalle de temps court et le point de fermeture (x_K_Zu) actuel est déterminé comme étant la valeur extrême parmi ces valeurs qui se trouve le plus loin dans le sens du débrayage (x_K_max).

3. Procédé selon la revendication 1, **caractérisé en ce que** plusieurs valeurs de la course d'actionnement (x_K) sont acquises à l'intérieur d'un intervalle de temps plus long et le point de fermeture (x_K_Zu) actuel est déterminé comme étant la valeur moyenne pondérée de ces valeurs, les valeurs acquises qui se trouvent moins loin dans le temps recevant un poids plus élevé que les valeurs acquises qui se trouvent plus loin dans le temps.

4. Procédé selon la revendication 1 ou 3, **caractérisé en ce que** plusieurs valeurs de la course d'actionnement (x_K) sont acquises à l'intérieur d'un intervalle de temps plus long et le point de fermeture (x_K_Zu) actuel est déterminé comme étant la valeur moyenne pondérée de ces valeurs, les valeurs qui se trouvent plus loin dans le sens du débrayage (x_K_max) recevant un poids plus élevé que les valeurs qui se trouvent plus loin dans le sens de l'embrayage (x_K = 0).

5. Procédé selon au moins l'une des revendications 1 à 4, **caractérisé en ce que** lorsque le moteur d'entraînement (3) est arrêté et/ou lorsque la boîte de vitesses (4) se trouve dans sa position neutre, l'accouplement à friction (2) est tout d'abord débrayé et de nouveau embrayé avant l'acquisition d'une ou plusieurs valeurs de la course d'actionnement (x_K).

6. Procédé selon au moins l'une des revendications 1 à 5, **caractérisé en ce qu'**en présence d'un point d'application (x_K_Anl') plus ancien, ce point d'application ainsi que les valeurs de la courbe caractéristique de couple (28) qui se trouvent entre le point de fermeture (x_K_Zu) et le point d'application (x_K_Anl) sont respectivement adaptés par une correction en fonction de la différence de course d'actionnement (Δx_K) entre le point de fermeture (x_K_Zu) actuel déterminé et le point de fermeture (x_K_Zu') plus ancien, applicable précédemment.
